# EUROPÄISCHE PATENTSCHRIFT

(11) **EP 2 647 883 B1**
(45) Veröffentlichungstag und Bekanntmachung des Hinweises auf die Patenterteilung: **21.08.2019**
(21) Anmeldenummer: 13160813.5
(22) Anmeldetag: 25.03.2013
(51) Int. Cl.: F16H 61/00, F15B 1/027

(54) **Hydraulische Steuerungsvorrichtung**
Hydraulic control device
Dispositif de commande hydraulique

(30) Priorität: 07.04.2012 DE 102012007124
(43) Veröffentlichungstag der Anmeldung: 09.10.2013
(73) Patentinhaber: Volkswagen Aktiengesellschaft, 38440 Wolfsburg (DE)
(72) Erfinder: Nicke, Dirk, 38114 Braunschweig (DE); Braun, Johannes, 38524 Sassenburg (DE)

(56) Entgegenhaltungen:
- EP-A2- 2 080 937
- WO-A1-2007/124790
- US-A- 3 991 570

## Beschreibung

Die Erfindung betrifft eine hydraulische Steuerungsvorrichtung für eine Kupplung und/oder für ein Getriebe eines Kraftfahrzeuges, vorzugsweise für ein Doppelkupplungsgetriebe, gemäß den Merkmalen des Oberbegriffes des Patentanspruches 1.
Aus der US 3,353,495 ist eine hydraulische Steuervorrichtung mit einem Druckspeicher bekannt. Die hydraulische Steuervorrichtung dient zur hydraulischen Steuerung einer Bremse eines Kraftfahrzeuges. Es ist ein Zwei-Ventil-Druckablasssystem vorgesehen, um den durch den Druckspeicher bereitgestellten Druck abzubauen. Zwei Ventile sind dabei in einer Baueinheit untergebracht. Der Druckspeicher ist über einen ersten Anschluss mit dem ersten Ventil verbunden. Das erste Ventil ist mit einer Feder vorgespannt, so dass in einer Grundstellung das erste Ventil einen Zugang zu einem Verbindungskanal innerhalb der Baueinheit öffnet. Dieser Verbindungskanal ist durch das zweite Ventil verschließbar. In einer Grundstellung des zweiten Ventils ist der Verbindungskanal mit einem Auslass verbunden, so dass das Druckmittel aus dem Auslass über eine Tankleitung in einen Tank zurückfließen kann. Wenn das Kraftfahrzeug in Betrieb ist und eine Pumpe den Druckspeicher mit Druck versorgt, so wird über einen hinter der Pumpe angeordneten Abzweig das erste Ventil geschlossen, so dass ein Druck in dem Speicher aufgebaut werden kann. Das zweite Ventil kann mittels einer mit Strom beaufschlagbaren Spule geschlossen werden. Dazu ist ein Schalter zur Betätigung der Spule und damit des zweiten Ventils vorgesehen. Wenn der Motor stoppt und die Pumpe den Betrieb einstellt, so muss erst der Schalter betätigt werden, bevor der Druck des Druckspeichers über das zweite Ventil abbaubar ist. Hierdurch erfolgt der Druckabbau nicht umgehend beispielsweise nach einem Pumpenstopp.

Aus der US 3,991,570 A ist eine hydraulische Steuerungsvorrichtung bekannt. Die hydraulische Steuerungsvorrichtung weist eine motorbetriebene Pumpe auf, wobei die Pumpe das Hydraulikmittel aus einem Tank durch ein Rückschlagventil pumpt. Hinter dem Rückschlagventil ist ein Druckspeicher angeordnet. Ferner ist hinter dem Rückschlagventil ein Druckabbauventil angeordnet. Das Druckabbauventil entleert den Druckspeicher und die damit verbundenen Systeme, wenn die Pumpe inaktiv ist. Das Druckabbauventil weist drei Anschlüsse auf. Ein erster Anschluss ist mit dem Druckspeicher verbunden. Ein zweiter Anschluss ist mit dem Tank über eine Tankleitung verbunden. Ein dritter Anschluss ist mit einem Druckmittelabzweig zwischen dem Rückschlagventil und der Pumpe verbunden. Wenn nun die Pumpe einen Druck an den dritten Anschluss überträgt, so wird innerhalb des Druckabbauventils ein Ventilelement derart verschoben, so dass ein Verbindungskanal zwischen dem ersten Anschluss und dem zweiten Anschluss geschlossen wird. Wird der dritte Anschluss drucklos geschaltet, so wird der Verbindungskanal zwischen dem ersten Anschluss und dem zweiten Anschluss geöffnet. Hierdurch fließt das Hydraulikmittel durch den ersten Anschluss und den zugehörigen Verbindungskanal sowie aus dem zweiten Anschluss heraus in den Tank zurück, sobald die Pumpe nicht arbeitet und somit der Abzweig und damit der dritte Anschluss drucklos geschaltet ist.

Schließlich ist aus der EP 2 080 937 A2 eine hydraulische Steuerungsvorrichtung für eine Kupplung für das Getriebe eines Kraftfahrzeugs bekannt, wobei ein Druckspeicher, ein Druckabbauventil und zwei hydraulische Teilsysteme vorgesehen sind. Jedes Teilsystem weist mindestens einen Aktor auf, wobei das Druckabbauventil mit jedem der Teilsysteme strömungstechnisch verbunden ist.

Die eingangs genannten hydraulischen Steuervorrichtungen sindnoch nicht optimal ausgebildet. Ein Abbau des Drucks im Druckspeicher erfolgt nur in Abhängigkeit von dem Betriebszustand der Pumpe. Daher sind die Steuervorrichtung noch nicht optimal zur Steuerung eines Getriebes und/oder einer Kupplung mit Aktoren ausgebildet.

Der Erfindung liegt daher die Aufgabe zugrunde, die eingangs genannte hydraulische Steuervorrichtung derart weiterzubilden und auszugestalten, so dass eine einfache und kostengünstige Möglichkeit geschaffen wird, einen Druckabbau mit einer hydraulischen Steuervorrichtung, insbesondere für ein Doppelkupplungsgetriebe vorzunehmen, wobei insbesondere der konstruktive und/oder schaltungstechnische Aufwand bzw. die damit verbundenen Kosten vermieden bzw. verringert sind.

Diese der Erfindung zugrunde liegende Aufgabe wird nun durch die Merkmale des Patentanspruches 1 gelöst. Es sind mindestens zwei hydraulische Teilsysteme vorgesehen, wobei jedes Teilsystem mindestens einen Aktor aufweist, wobei das Druckabbauventil mit jedem der Teilsysteme strömungstechnisch verbunden ist und wobei, wenn die Teilsysteme einen Mindestdruck unterschreiten, der im Druckspeicher gespeicherte Druck über das Druckabbauventil abbaubar ist. Das Druckabbauventil bildet einen mechanischen beziehungsweise hydraulischen "Schalter", welcher eine Öffnung oder Blende in einem Hauptdruckkanal mit dem Druckspeicher öffnet, sobald sämtliche Verbraucher in den Teilsystemen einen Mindestdruck unterschreiten, das heißt keine Funktion gefordert wird. Die hydraulische Steuervorrichtung hat den Vorteil, dass die Steuervorrichtung gut an ein Doppelkupplungsgetriebe angepasst ist. Jedes der Teilsysteme kann einem Teilgetriebe des Doppelkupplungsgetriebes zugeordnet sein. Das Druckabbauventil weist einen Stufenkolben auf bzw. ist als Stufenkolben-Ventil ausgeführt. Das Druckabbauventil weist einen gestuften Zylinder auf, wobei der Stufenkolben in dem Zylinder geführt ist. Der Stufenkolben ist mit einer Feder vorgespannt. Der Stufenkolben wird an einer seiner Stirnseiten durch eine Feder in eine Position gedrückt, in der eine Verbindung bzw. Blende vom Hauptdruckkanal in Richtung Tank geöffnet wird. Durch die Blende wird Druckmittel, beispielsweise ein Drucköl, aus dem Hauptdruckkanal in den Tank über eine Tankleitung abgeleitet. Die Teilsysteme sind über Teilsystemventile mit Druck beaufschlagbar. Sobald dieser Druck, insbesondere in nur einem der jeweiligen Teilsysteme einen Mindestwert überschritten hat, führt der Druck zum Verschieben des Stufenkolbens und damit zum Verschließen der Blende aus dem Hauptdruckkanal. Über einen entsprechenden Teilsystemdruckkanal ist jedes Teilsystem mit einem Wirkraum des Stufenkolbens verbunden. Der Druck aus dem Teilsystem wirkt über den Teilsystemdruckkanal auf unterschiedlich große Ringflächen des Stufenkolbens. Die Differenz der Ringflächen bewirkt bei Druckbeaufschlagung aus diesen Teilsystemen eine Kraft auf den Stufenkolben und damit eine Verschiebung des Stufenkolbens, wodurch die Verbindung beziehungsweise die Blende zwischen dem Hauptdruckkanal und der Tankleitung geschlossen wird. Sobald in einem der beiden Teilsysteme daher ein Mindestdruck anliegt, wird der Stufenkolben verschoben und die Blende zum Hauptdruckkanal öldicht verschlossen, da die resultierende Kraft aus einem der beiden Teilsystemdrücken größer als die Federkraft ist. Die Wirkräume sind insbesondere über einen Ringspalt miteinander verbunden, wodurch ein geringer Ölaustausch bei verschiedenen Druckniveaus in den Teilgetrieben entsteht. Die eingangs genannten Nachteile sind daher vermieden und entsprechende Vorteile sind erzielt.

Es gibt nun eine Vielzahl von Möglichkeiten, die eingangs genannte hydraulische Steuervorrichtung auszugestalten und weiterzubilden. Hierfür darf zunächst auf die dem Patentanspruch 1 nachgeordneten Patentansprüche verwiesen werden. Im Folgenden werden zwei bevorzugte Ausgestaltungen der Erfindung anhand der nachfolgenden Beschreibung und der Zeichnung näher erläutert. In der Zeichnung zeigt:
- Fig. 1: in einem schematischen Hydraulikplan eine hydraulische Steuervorrichtung mit einem ersten Druckabbauventil,
- Fig. 2: in einer schematischen Detaildarstellung das Druckabbauventil aus Fig. 1,
- Fig. 3: in einem schematischen Hydraulikplan die hydraulische Steuervorrichtung mit einem zweiten Druckabbauventil, und
- Fig. 4: in einer schematischen Detaildarstellung das zweite Druckabbauventil.

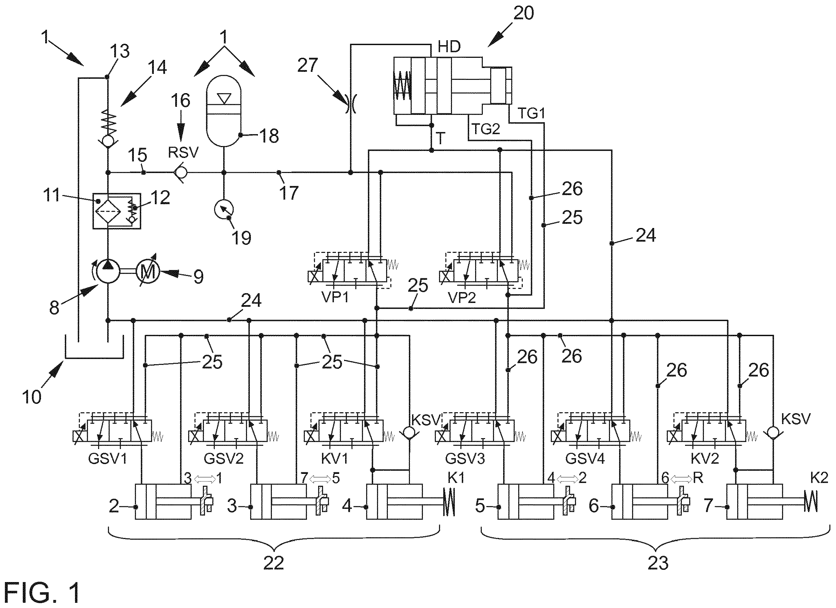

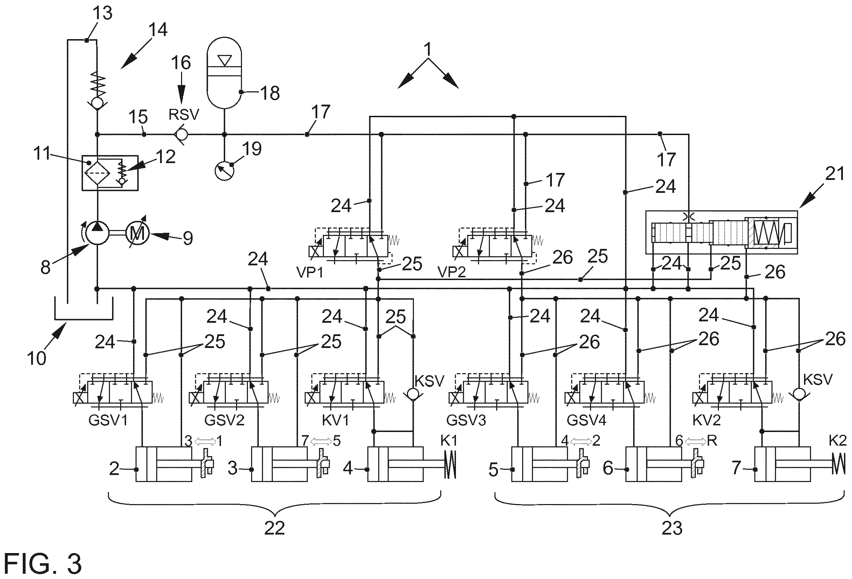

In den Fig. 1 und 3 ist eine hydraulische Steuerungsvorrichtung 1 für eine nicht näher dargestellte Kupplung und/oder für ein nicht näher dargestelltes Getriebe eines Kraftfahrzeuges dargestellt. Die hydraulische Steuerungsvorrichtung 1 ist insbesondere für ein Doppelkupplungsgetriebe ausgebildet und geeignet.

Die hydraulische Steuerungsvorrichtung 1 weist mindestens einen Aktor (auch als "Aktuator" bezeichnenbar) auf. In der Darstellung sind insgesamt sechs Aktoren 2 bis 7 schematisch dargestellt. Der Aktor 2 dient zur Bewegung einer Schalteinrichtung zum Einlegen der Gänge eins und drei. Der Aktor 3 dient zur Betätigung einer weiteren Schalteinrichtung zum Einlegen der Gänge sieben und fünf. Der Aktor 4 dient zur Betätigung einer ersten Kupplung K1 des Doppelkupplungsgetriebes. Der Aktor 5 dient zur Betätigung einer weiteren Schalteinrichtung zum Einlegen der Gänge zwei und vier. Der Aktor 6 dient zur Betätigung einer weiteren Schalteinrichtung zum Einlegen des sechsten Ganges und eines Rückwärtsgangs. Der Aktor 7 dient zur Betätigung einer zweiten Kupplung K2 des Doppelkupplungsgetriebes. Die Aktoren 2 bis 7 sind hydraulisch betätigbar. Die Aktoren 2, 3 beziehungsweise die Aktoren 5, 6 sind als doppelt wirkende Zylinder ausgebildet.

Zur Versorgung der Aktoren 2 bis 7 mit einem Druckmittel, insbesondere einem Hydrauliköl ist eine Pumpe 8 vorgesehen. Die Pumpe 8 wird von einem Motor 9 angetrieben und pumpt das Druckmittel aus einem Tank 10. Der Tank 10 kann auch als Sumpf bezeichnet werden. Der Motor 9 ist insbesondere als Elektromotor ausgebildet. Die Pumpe 8 kann eine maximale spezifische Förderleistung aufweisen. Die Pumpe 8 kann als Außenzahnradpumpe ausgebildet sein. Die Pumpe 8 fördert das Druckmittel zu einem Filter 11. Parallel zu dem Filter 11 ist ein federbelastetes Rückschlagventil 12 angeordnet.

Hinter dem Filter 11 und dem Rückschlagventil 12 ist ein Abzweig 13 mit einem Druckbegrenzungsventil 14 angeordnet. Das Druckbegrenzungsventil 14 öffnet, wenn ein Maximaldruck erreicht bzw. überschritten wird. Das Druckbegrenzungsventil 14 ist als federbelastetes Rückschlagventil ausgebildet. Der Abzweig 13 mündet wieder in den Tank 10. Ferner ist hinter dem Filter 11 und dem Rückschlagventil 12 ein weiterer Abzweig 15 angeordnet, wobei der Abzweig 15 über ein weiteres Rückschlagventil 16 in den Hauptdruckkanal 17 mündet.

Die hydraulische Steuerungsvorrichtung 1 weist ferner einen Druckspeicher 18 auf. Der Druckspeicher 18 ist dem Hauptdruckkanal 17 zugeordnet. Die hydraulische Steuerungsvorrichtung 1 weist ferner einen Druckmesser 19 auf. Der Druckmesser 19 misst den Druck im Hauptdruckkanal 17.

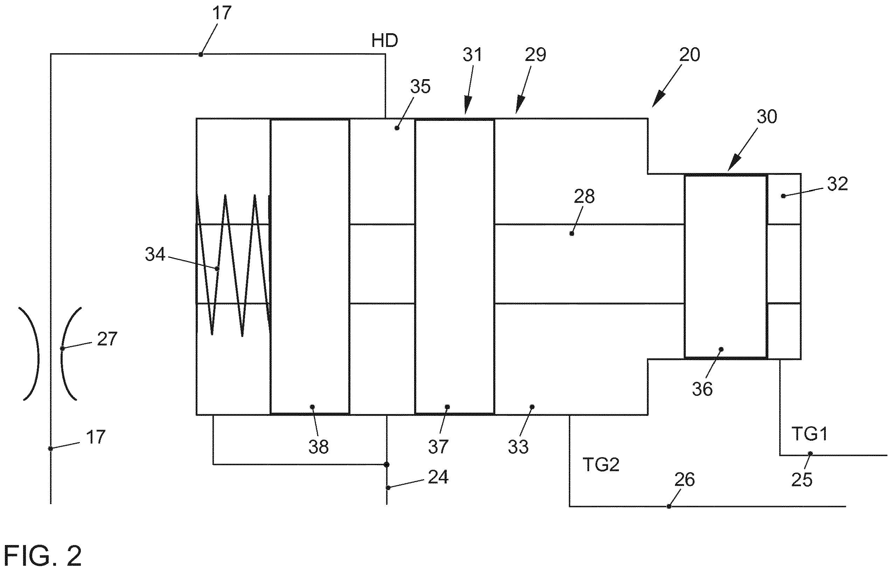

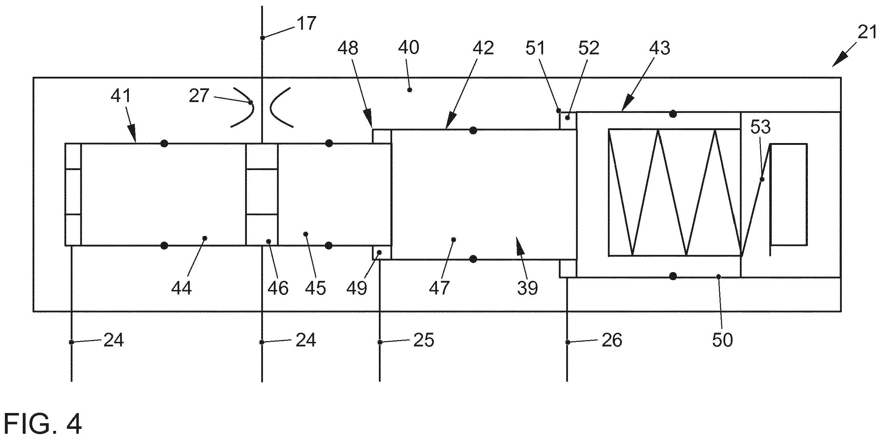

Die hydraulische Steuerungsvorrichtung 1 weist ferner ein Druckabbauventil 20 (vgl. Fig. 1, 2) beziehungsweise ein Druckabbauventil 21 (vgl. Fig. 3 und 4) auf. Das Druckabbauventil 20 beziehungsweise 21 dient dazu, den Speicherdruck des Druckspeichers 18 beziehungsweise den Druck im Hauptdruckkanal 17 abzubauen.

Es sind mindestens zwei hydraulische Teilsysteme 22, 23 vorgesehen, wobei jedes Teilsystem 22, 23 mindestens einen Aktor 2, 3, 4; 5, 6 bzw. 7 aufweist, wobei das Druckabbauventil 20 bzw. 21 mit jedem der Teilsysteme 22, 23 strömungstechnisch verbunden ist und wobei, wenn die Teilsysteme 22, 23 einen Mindestdruck unterschreiten, der im Druckspeicher 18 gespeicherte Druck über das Druckabbauventil 20 bzw. 21 abbaubar ist.

Dem Teilsystem 22 sind die Aktoren 2, 3, 4 des einen Teilgetriebes und dem anderen Teilsystem 23 sind die Aktoren 5, 6, 7 des anderen Teilgetriebes zugeordnet.

Den Aktoren 2, 3 ist jeweils ein Gangstellventil GSV1 bzw. GSV2 zugeordnet. Die Gangstellventile GSV1, GSV2 sind dem ersten Teilsystem 22 zugeordnet. Dem Aktor 4 ist ein Kupplungsventil KV1 zugeordnet. Das Kupplungsventil KV1 ist dem ersten Teilsystem 22 zugeordnet. Die Gangstellventile GSV1, GSV2 und das Kupplungsventil KV1 sind als 3/3-Wegeventile ausgebildet.

In entsprechender Weise ist den Aktoren 5, 6 je ein Gangstellventil GSV3 bzw. GSV4 zugeordnet und dem Aktor 7 ist ein Kupplungsventil KV2 zugeordnet. Die Aktoren 4, 7 zur Betätigung der Kupplung sind einfach wirkend mit Rückhubfeder ausgebildet. Der Hauptkanal 17 verzweigt über zwei Teilgetriebeventile VP1, VP2 in die jeweiligen Teilsysteme 22 bzw. 23. Die Teilgetriebeventile VP1, VP2 sind ebenfalls als 3/3-Wegeventile ausgebildet. Mittels der Teilgetriebeventile VP1, VP2 sind das Teilsystem 22 beziehungsweise das Teilsystem 23 drucklos schaltbar. Sowohl die Teilgetriebeventile VP1 bzw. VP2 als auch die Gangstellventile GSV1, GSV2, GSV3, GSV4 und die Kupplungsventile KV1, KV2 sind über eine Tankleitung 24 mit dem Tank 10 verbunden. Die Gangstellerventile GSV1, GSV2 sowie das Kupplungsventil KV1 sind über einen Teilsystemdruckkanal 25 mit dem Hauptdruckkanal 17 (über das Teilgetriebeventil VP1) bzw. mit dem Druckabbauventil 20 verbindbar. Über einen entsprechenden Teilsystemdruckkanal 26 sind die Gangstellerventile GSV3, GSV4 und das Kupplungsventil KV2 mit dem Hauptdruckkanal 17 (über das Teilgetriebeventil VP2) bzw. mit dem Druckabbauventil 21 verbindbar.

Das Druckabbauventil 20, 21 ist nun zum einen mit dem Hauptdruckkanal 17 und zum anderen mit der Tankleitung 24 funktional wirksam verbunden. Ferner ist das Druckabbauventil 20, 21 zum einen mit dem Teilsystemdruckkanal 25 und zum anderen mit dem Teilsystemdruckkanal 26 verbunden. Wenn nun der Systemdruck in beiden Teilsystemdruckkanälen 25, 26 unter den Mindestdruck fällt, so nimmt das Druckabbauventil 20, 21 einen Zustand ein, in dem eine Strömungsverbindung zwischen dem Hauptdruckkanal 17 und der Tankleitung 24 besteht. Hierdurch kann der Druck des Druckspeichers 18 über das Druckabbauventil 20, 21 abgebaut werden. Wenn der Systemdruck in zumindest einem der beiden Teilsysteme 22, 23 den Mindestdruck überschreitet, verlagert sich das jeweilige Druckabbauventil 20, 21 in eine Stellung, so dass hier keine Strömungsverbindung zwischen dem Hauptdruckkanal 17 und der Tankleitung 24 besteht.

Im Folgenden darf auf den Aufbau der Druckabbauventile 20 und 21 anhand der Fig. 2 und 4 näher eingegangen werden.

Die Druckabbauventile 20, 21 sind jeweils über ein Drosselventil 27 mit dem Hauptdruckkanal 17 verbunden. Somit wird einerseits ein schlagartiger Druckabbau verhindert, anderseits nach dem durchgeführten Druckabbau ein Druckaufbau in dem Druckspeicher 18 ermöglicht.

Das in der Fig. 2 dargestellte Druckabbauventil 20 weist einen Stufenkolben 28 auf. Der Stufenkolben 28 ist in einem entsprechend gestuften Zylinder 29 geführt. Der Zylinder 29 weist zwei Abschnitte 30, 31 mit unterschiedlichem Durchmesser auf. Der Abschnitt 30 weist einen kleineren Durchmesser als der Abschnitt 31 auf. Der Zylinder 29 und der Stufenkolben 28 weist für jedes Teilsystem 22, 23 einen eigenen Wirkraum 32, 33 auf. Der Teilsystemdruckkanal 25 des ersten Teilsystems 22 beziehungsweise des ersten Teilgetriebes mündet in den ersten Wirkraum 32 und der zweite Teilsystemdruckkanal 26 des zweiten Teilgetriebes beziehungsweise des zweiten Teilsystems 23 mündet in den zweiten Wirkraum 33.

Die Wirkräume 32, 33 sind ringförmig beziehungsweise als Ringräume ausgebildet. Der Stufenkolben 28 ist durch eine Feder 34 vorgespannt. In der nicht dargestellten Grundstellung verschließt der Stufenkolben 28 die entsprechenden Anschlüsse (nicht näher bezeichnet) des Hauptdruckkanals 17 beziehungsweise der Tankleitung 24, so dass das Druckmittel nicht in die Tankleitung 24 aus dem Hauptdruckkanal 17 heraus entweichen kann. In der dargestellten Stellung des Stufenkolbens 28 sind der Hauptdruckkanal 17 und die Tankleitung 24 über einen von dem Stufenkolben 28 begrenzten Blendenraum 35 miteinander verbunden. Der Blendenraum 35 ist ringförmig ausgebildet. Der Blendenraum 35 ist beabstandet zu den Wirkräumen 32, 33 ausgebildet. Der Wirkraum 32 und der Wirkraum 33 sind durch einen ersten Kolbenbereich 36 voneinander getrennt. Der erste Kolbenbereich 36 ist an dem ersten Abschnitt 30 geführt. Der Kolbenbereich 36 ist abdichtend an dem Abschnitt 30 geführt. Der Blendenraum 35 und der Wirkraum 33 sind durch einen zweiten Kolbenbereich 37 voneinander beabstandet. Zwischen dem Blendenraum 35 und der Feder 34 ist ein weiterer Kolbenbereich 38 angeordnet. Die beiden Kolbenbereiche 37, 38 sind abdichtend an dem Abschnitt 31 geführt. In der hier in Fig. 2 dargestellten Position ist die Verbindung zwischen dem Hauptdruckkanal 17 und der Tankleitung 24 geöffnet.

Im Folgenden darf auf die in Fig. 4 dargestellte Ausgestaltung des Druckabbauventils 21 näher eingegangen werden:
Das Druckabbauventil 21 weist einen Stufenkolben 39 und einen ebenfalls gestuften Zylinder 40 auf. Der Stufenkolben 39 weist drei Abschnitte 41, 42, 43 jeweils mit unterschiedlichem Durchmesser auf. Der Stufenkolben 39 weist zwei Kolbenbereiche 44, 45 auf, die an den Innendurchmesser des Abschnitts 41 angepasst sind. Zwischen den beiden Kolbenbereichen 44, 45 ist ein Blendenraum 46 ausgebildet. Je nach Stellung des Stufenkolbens 39 verbindet oder sperrt der Blendenraum 46 beziehungsweise die Kolbenbereiche 44, 45 die Verbindung zwischen dem Hauptdruckkanal 17 und der Tankleitung 24. Der Blendenraum 46 ist durch einen Ringraum zwischen den beiden Kolbenbereichen 44, 45 gebildet.

Der Stufenkolben 39 weist ferner einen Kolbenbereich 47 auf, wobei der Kolbenbereich 47 an den Innendurchmesser des Abschnitts 42 angepasst ist. Durch den Abschnitt 42, den Kolbenbereich 47 und die Stirnseite der Stufe 48 ist ein Wirkraum 49 begrenzt, wobei der Wirkraum 49 funktional wirksam mit dem ersten Teilsystemdruckkanal 25 verbunden ist. Ein Kolbenbereich 50 ist dem Abschnitt 43 mit entsprechend angepasstem Durchmesser zugeordnet. Der Kolbenbereich 50 sowie der Abschnitt 43 und die Stirnseite einer Stufe 51 begrenzen einen zweiten Wirkraum 52, wobei der Wirkraum 52 funktional wirksam mit dem Teilsystemdruckkanal 26 verbunden ist.

Die Ringflächen an den Stufen 48, 51 sind unterschiedlich groß. Die Differenz der Ringflächen bewirkt bei Druckbeaufschlagung aus den Teilsystemen 22, 23 ebenfalls eine Kraft auf den Stufenkolben 39. Soweit der Druck in einem der beiden Teilsystemdruckkanäle 25, 26 einen Mindestdruck überschreitet, wird die resultierende Kraft aus einem der Wirkräume 49, 52 oder aus beiden Wirkräumen 49, 52 größer als die Federkraft und dies führt zum Verschieben des Stufenkolbens 39 gegen eine Feder 53. Hierdurch wird der Blendenraum 46 derart verschoben, so dass der Kolbenbereich 44 die Verbindung zwischen der Tankleitung 24 und dem Hauptdruckkanal 17 schließt.

Die Wirkräume 49, 52 können über einen engen Ringspalt miteinander verbunden sein, wodurch ein geringer Ölaustausch bei verschiedenen Druckniveaus in den Teilgetrieben besteht. Dies resultiert hier auch nicht in einer Zunahme der Systemleckage, da die Systemleckage durch die Teilgetriebeventile VP1 und VP2 ausgeglichen wird.

Im Folgenden darf nochmals Bezug genommen werden auf die Fig. 1 und 3:
Im Betrieb sind beide Teilgetriebeventile VP1 und VP2 ständig geöffnet. Die Teilgetriebeventile VP1, VP2 schließen entweder, wenn die "Zündung ausgeschaltet ist", oder bei einem Fehler in einem der Teilsysteme 22, 23, wobei hierbei nur das jeweils zugeordnete Teilgetriebeventil VP1 beziehungsweise VP2 schließt. Im Betrieb kann der Druck in den Teilsystemen 22, 23 beziehungsweise in den Teilsystemdruckkanälen 25, 26 variieren. Der Teilsystemdruck in den Teilsystemdruckkanälen 25, 26 weist jeweils einen bestimmten Druck auf. Das jeweilige Druckabbauventil 20 bzw. 21 ist so eingestellt, dass die Tankleitung 24, auch wenn beispielsweise das erste Teilgetriebe abgeschaltet ist und der Druck im zweiten Teilgetriebe zumindest den Mindestdruck beträgt (oder größer ist), geschlossen bleibt.

Das Druckabbauventil 20 beziehungsweise 21 kann entweder zweistufig oder dreistufig ausgebildet sein. Die an den Blendenraum 35 beziehungsweise 46 angrenzenden Flächen sind insbesondere fein bearbeitet. In einer sehr kostengünstigen Variante kann die Blende, d. h. dieser Bereich des Druckabbauventils 20 bzw. 21, als ein Kegel- oder Kugelventil ausgeführt werden oder kann der Stufenkolben mit einem solchem Ventil verbunden werden bzw. ein solches Ventil betätigen. Somit ist keine feine Bearbeitung notwendig. Die anderen Abschnitte 30 bzw. 42, 43 können kostengünstig durch O-Ringe abgedichtet werden. Die fein bearbeiteten Flächen sind beim dreistufigen Druckabbauventil 21 kleiner als beim zweistufigen Druckabbauventil 20.

Die hier vorgestellte mechanische Lösung der Druckabbauventile 20, 21 ist kostengünstig und einfach herzustellen. In alternativer Ausgestaltung ist es denkbar, dass das Druckabbauventil 20, 21 noch zusätzlich elektrisch betätigt wird, um z. B. den Druckabbau bei Bedarf in bestimmten Situationen zu verhindern. Hierbei ist eine elektrische Zuleitung bzw. eine in entsprechende Steueranweisung eines Steuergerätes notwendig.

### Bezugszeichenliste

- 1: hydraulische Steuerungsvorrichtung
- 2: Aktor
- 3: Aktor
- 4: Aktor
- 5: Aktor
- 6: Aktor
- 7: Aktor
- 8: Pumpe
- 9: Motor
- 10: Tank
- 11: Filter
- 12: Rückschlagventil
- 13: Abzweig
- 14: Druckbegrenzungsventil
- 15: Abzweig
- 16: Rückschlagventil
- 17: Hauptdruckkanal
- 18: Druckspeicher
- 19: Druckmesser
- 20: Druckabbauventil
- 21: Druckabbauventil
- 22: Teilsystem
- 23: Teilsystem
- 24: Tankleitung
- 25: Teilsystemdruckkanal
- 26: Teilsystemdruckkanal
- 27: Drosselventil
- 28: Stufenkolben
- 29: Zylinder
- 30: Abschnitt
- 31: Abschnitt
- 32: Wirkraum
- 33: Wirkraum
- 34: Feder
- 35: Blendenraum
- 36: Kolbenbereich
- 37: Kolbenbereich
- 38: Kolbenbereich
- 39: Stufenkolben
- 40: Zylinder
- 41: Abschnitt
- 42: Abschnitt
- 43: Abschnitt
- 44: Kolbenbereich
- 45: Kolbenbereich
- 46: Blendenraum
- 47: Kolbenbereich
- 48: Stufe
- 49: Wirkraum
- 50: Kolbenbereich
- 51: Stufe
- 52: Wirkraum
- 53: Feder

- GSV1: Gangstellventil
- GSV2: Gangstellventil
- KV1: Kupplungsventil
- KV2: Kupplungsventil
- VP1: Teilgetriebeventil
- VP2: Teilgetriebeventil

## Patentansprüche

1. Hydraulische Steuerungsvorrichtung (1) für eine Kupplung und/oder für ein Getriebe eines Kraftfahrzeuges, vorzugsweise für ein Doppelkupplungsgetriebe, mit mindestens einem Aktor (2, 3, 4, 5, 6, 7), mit einem Druckspeicher (18) und mit einem Druckabbauventil (20, 21), wobei der im Druckspeicher (18) gespeicherte Druck über das Druckabbauventil (20, 21) abbaubar ist, **wobei** mindestens zwei hydraulische Teilsysteme (22, 23) vorgesehen sind, wobei jedes Teilsystem (22, 23) mindestens einen Aktor (2, 3, 4; 5, 6, 7) aufweist und wobei das Druckabbauventil (20, 21) mit jedem der Teilsysteme (22, 23) strömungstechnisch verbunden ist, **dadurch gekennzeichnet, dass**, wenn die Teilsysteme (22, 23) einen Mindestdruck unterschreiten, der im Druckspeicher (18) gespeicherte Druck über das Druckabbauventil (20, 21) abbaubar ist, wobei das Druckabbauventil (20, 21) einen Stufenkolben (28, 39) aufweist bzw. als Stufenkolben-Ventil ausgeführt ist, wobei der Stufenkolben in einem entsprechenden Zylinder (29, 40) geführt ist, wobei der Stufenkolben mehrere, den Teilsystemen (22, 23) zugeordnete Wirkräume (32, 33; 49, 52) aufweist und wobei die Wirkräume (32, 33; 49, 52) über den Teilsystemen (22, 23) zugeordnete Teilsystemdruckkanäle (25, 26) druckbeaufschlagbar sind.

2. Hydraulische Steuerungsvorrichtung nach Anspruch 1, **dadurch gekennzeichnet, dass** mit dem Druckabbauventil (20, 21) eine Strömungsverbindung zwischen einem Hauptdruckkanal (17) mit dem Druckspeicher (18) zu einer Tankleitung (24) verschließbar und öffenbar ist.

3. Hydraulische Steuervorrichtung nach Anspruch 2, **dadurch gekennzeichnet, dass** der Stufenkolben (28, 39) federbeaufschlagt ist, wobei der Stufenkolben (28, 39) durch die Federkraft in eine Position verstellt wird, in der die Verbindung zwischen dem Hauptdruckkanal (17) und der Tankleitung (24) geöffnet ist.

4. Hydraulische Steuervorrichtung nach Anspruch 3, **dadurch gekennzeichnet, dass** die durch den Mindestdruck in mindestens einem der Teilsysteme (22, 23) im Druckabbauventil (20, 21) wirksame bzw. resultierende Kraft größer als die Federkraft ist.

5. Hydraulische Steuerungsvorrichtung nach einem der vorstehenden Ansprüche, **dadurch gekennzeichnet, dass** jedes der Teilsysteme (22, 23) über ein Teilgetriebeventil (VP1, VP2) von einem Hauptdruckkanal (17) trennbar und/oder mit dem Hauptdruckkanal (17) strömungstechnisch verbindbar ist.

6. Hydraulische Steuerungsvorrichtung nach einem der vorstehenden Ansprüche, **dadurch gekennzeichnet, dass** der Stufenkolben (28) und der entsprechende Zylinder (40) zweistufig ausgebildet ist.

7. Hydraulische Steuerungsvorrichtung nach einem der vorstehenden Ansprüche, **dadurch gekennzeichnet, dass** der Stufenkolben (39) und der entsprechende Zylinder (40) dreistufig ausgebildet ist.

8. Hydraulische Steuerungsvorrichtung nach Anspruch 2, **dadurch gekennzeichnet, dass** die strömungstechnische Verbindung zwischen dem Druckabbauventil (20, 21) und dem Druckspeicher (18) oder die strömungstechnische Verbindung zwischen dem Druckabbauventil (20, 21) und der Tankleitung (24) gedrosselt ist.

9. Hydraulische Steuerungsvorrichtung nach dem Anspruch 8, **dadurch gekennzeichnet, dass** ein Drosselventil (27) in dem Hauptdruckkanal (17) oder in dem Druckabbauventil (20, 21) angeordnet ist.

## Claims

1. A hydraulic control device (1) for a clutch and/or for a transmission of a motor vehicle, preferably for a twin-clutch transmission, having at least one actuator (2, 3, 4, 5, 6, 7), with a pressure accumulator (18) and with a pressure reduction valve (20, 21), wherein the pressure stored in the pressure accumulator (18) can be reduced via the pressure reduction valve (20, 21), **wherein** at least two hydraulic sub-systems (22, 23) are provided, wherein each sub-system (22, 23) has at least one actuator (2, 3, 4; 5, 6, 7) and wherein the pressure reduction valve (20, 21) is fluidically connected to each of the sub-systems (22, 23), **characterized in that** if the sub-systems (22, 23) fall below a minimum pressure, the pressure stored in the pressure accumulator (18) can be reduced via the pressure reduction valve (20, 21), wherein the pressure reduction valve (20, 21) has a step piston (28, 39) or is designed as a step piston valve, wherein the step piston is guided in a corresponding cylinder (29, 40), wherein the step piston has a plurality of operative chambers (32, 33; 49, 52) associated with the sub-systems (22, 23) and wherein the operative chambers (32, 33; 49, 52) can be pressurized via the sub-system pressure channels (25, 26) associated with the sub-systems (22, 23).

2. A hydraulic control device according to Claim 1, **characterized in that** with the pressure reduction valve (20, 21) a flow connection between a main pressure channel (17) with the pressure accumulator (18) to a tank line (24) can be closed and opened.

3. An hydraulic control device according to Claim 2, **characterized in that** the step piston (28, 39) is spring-loaded, wherein the step piston (28, 39) is moved by the spring force into a position, in which the connection between the main pressure channel (17) and the tank line (24) is opened.

4. A hydraulic control device according to Claim 3, **characterized in that** the force which is effective or which results due to the minimum pressure in at least one of the sub-systems (22, 23) in the pressure reduction valve (20, 21) is greater than the spring force.

5. An hydraulic control device according to any one of the preceding claims, **characterized in that** each of the sub-systems (22, 23) can be separated via a partial transmission valve (VP1, VP2) from a main pressure channel (17) and/or can be fluidically connected to the main pressure channel (17).

6. A hydraulic control device according to any one of the preceding claims, **characterized in that** the step piston (28) and the corresponding cylinder (40) is designed in two-steps.

7. A hydraulic control device according to any one of the preceding claims, **characterized in that** the step piston (39) and the corresponding cylinder (40) is designed in three-steps.

8. A hydraulic control device according to Claim 2, **characterized in that** the fluidic connection between the pressure reduction valve (20, 21) and the pressure accumulator (18) or the fluidic connection between the pressure reduction valve (20, 21) and the tank line (24) is throttled.

9. A hydraulic control device according to Claim 8, **characterized in that** a throttle valve (27) is arranged in the main pressure channel (17) or in the pressure reduction valve (20, 21).

## Revendications

1. Dispositif de commande (1) hydraulique pour un embrayage et/ou pour une boîte de vitesses d'un véhicule automobile, de préférence pour une boîte de vitesses à embrayage double, avec au moins un actionneur (2, 3, 4, 5, 6, 7), avec un accumulateur de pression (18) et avec une soupape de réduction de pression (20, 21), la pression accumulée dans l'accumulateur de pression (18) pouvant être réduite par le biais de la soupape de réduction de pression (20, 21), au moins deux systèmes partiels (22, 23) hydrauliques étant prévus, chaque système partiel (22, 23) comportant au moins un actionneur (2, 3, 4 ; 5, 6, 7), et la soupape de réduction de pression (20, 21) étant raccordée fluidiquement à chacun des systèmes partiels (22, 23), **caractérisé en ce que**, quand les systèmes partiels (22, 23) passent au-dessous d'une pression minimale, la pression accumulée dans l'accumulateur de pression (18) peut être réduite par le biais de la soupape de réduction de pression (20, 21), la soupape de réduction de pression (20, 21) comportant un piston à gradins (28, 39) ou respectivement étant constituée en tant que soupape - piston à gradins, le piston à gradins étant guidé dans un cylindre (29, 40) correspondant, le piston à gradins comportant plusieurs espaces d'action (32, 33 ; 49, 52) affectés aux systèmes partiels (22, 23), et les espaces d'action (32, 33 ; 49, 52) pouvant être alimentés en pression par le biais de canaux de pression de systèmes partiels (25, 26) affectés aux systèmes partiels (22, 23).

2. Dispositif de commande hydraulique selon la revendication 1, **caractérisé en ce que,** avec la soupape de réduction de pression (20, 21), un raccordement d'écoulement entre un canal de pression principal (17) avec l'accumulateur de pression (18) et une conduite de réservoir (24) peut être fermé et ouvert.

3. Dispositif de commande hydraulique selon la revendication 2, **caractérisé en ce que** le piston à gradins (28, 39) est exposé à une action de ressort, le piston à gradins (28, 39) étant déplacé par la force de ressort dans une position dans laquelle le raccordement entre le canal de pression principal (17) et la conduite de réservoir (24) est ouvert.

4. Dispositif de commande hydraulique selon la revendication 3, **caractérisé en ce que** la force active ou respectivement résultant de la pression minimale dans au moins l'un des systèmes partiels (22, 23) dans la soupape de réduction de pression (20, 21) est plus grande que la force de ressort.

5. Dispositif de commande hydraulique selon l'une des revendications précédentes, **caractérisé en ce que** chacun des systèmes partiels (22, 23) peut être séparé d'un canal de pression principal (17) par le biais d'une soupape de boîte partielle (VP1, VP2) et/ou peut être raccordé fluidiquement au canal de pression principal (17).

6. Dispositif de commande hydraulique selon l'une des revendications précédentes, **caractérisé en ce que** le piston à gradins (28) et le cylindre (40) correspondant sont constitués à deux gradins.

7. Dispositif de commande hydraulique selon l'une des revendications précédentes, **caractérisé en ce que** le piston à gradins (39) et le cylindre (40) correspondant sont constitués à trois gradins.

8. Dispositif de commande hydraulique selon la revendication 2, **caractérisé en ce que** le raccordement fluidique entre la soupape de réduction de pression (20, 21) et l'accumulateur de pression (18), ou le raccordement fluidique entre la soupape de réduction de pression (20, 21) et la conduite de réservoir (24) est étranglé.

9. Dispositif de commande hydraulique selon la revendication 8, **caractérisé en ce qu'**une soupape d'étranglement (27) est disposée dans le canal de pression principal (17) ou dans la soupape de réduction de pression (20, 21).
